Europäisches Patentamt

European Patent Office

Office européen des brevets

(11) Veröffentlichungsnummer: **0 309 817**
**A1**

## (12) EUROPÄISCHE PATENTANMELDUNG

(21) Anmeldenummer: 88115061.9

(22) Anmeldetag: 15.09.88

(51) Int. Cl.4: **G11B 33/10 , G11B 33/00**

(30) Priorität: 30.09.87 DE 3732938

(43) Veröffentlichungstag der Anmeldung:
**05.04.89 Patentblatt 89/14**

(84) Benannte Vertragsstaaten:
**AT BE CH DE ES FR GB GR IT LI LU NL SE**

(71) Anmelder: **Deutsche Thomson-Brandt GmbH**
**Hermann-Schwer-Strasse 3 Postfach 1307**
**D-7730 Villingen-Schwenningen(DE)**

(72) Erfinder: **Gehringer, Reinhard**
**Längestrasse 40**
**D-7712 Blumberg 8(DE)**
Erfinder: **Kühn, Hans-Robert**
**Haydnweg 9**
**D-7742 St. Georgen(DE)**

(54) **CD-Gerät mit dynamischer Darstellung von Funktionsabläufen.**

(57)
    2.1 Bisher bekannte Anzeigen von ausgelösten Funktionen waren Rückmeldungen, die statisch anzeigten. Über tatsächliche Bewegungsabläufe wurde keine entsprechend bewegte Anzeige gegeben. Diesen Mangel zu beseitigen war die der Erfindung zugrunde liegende Aufgabe.

    2.2 Die Problemlösung sieht vor, bewegte, also dynamische Darstellung von Such- oder Wechselabläufen im Gerät auf einem Display, wobei die Pick-up-Systembewegung in der tatsächlichen Bewegungsrichtung horizontal dargestellt ist. Die vertikale Bewegung von Greifervorrichtungen oder Fahrstuhl-Einrichtungen sind senkrecht dazu vertikal angeordnet dargestellt.

    2.3 CD-Geräte.

EP 0 309 817 A1

## CD-Gerät mit dynamischer Darstellung von Funktionsabläufen

Die Erfindung betrifft ein CD- Aufnahme und/oder Wiedergabegerät nach dem Oberbegriff des ersten Anspruchs.

Es ist bei CD-Geräten bekannt, an der Bedienungsseite, das ist üblicherweise die Frontseite des Gerätes, verschiedenartige Anzeigen zu realisieren, die dem Benutzer die Bedienung erleichtern. Dabei ist es üblich, jede Funktionsbetätigung, beispielsweise durch Drücken von Tasten, jeweils durch Anzeigen rückzumelden.

Es ist weiterhin bekannt, die zur Zeit abspielende Titel-Nummer oder die vom Bediener selektierte Titel- oder Track-Nummer anzuzeigen. Bei Magazin-Spielern wird darüberhinaus auch angezeigt, beispielsweise in einer LED-Kette, ob in den einzelnen Magazin-Fächern Platten sind oder nicht. Die bisherigen Anzeigen, z. B. 'Suchen' oder 'Search', waren nur statische Anzeigen. Während des im Gerät stattfindenden Such- oder Auswahlvorgangs findet keine diesen Bewegungsablauf darstellende oder symbolisierende Anzeige statt.

Der Erfindung lag die Aufgabe zugrunde, diesen Mangel zu beheben.

Die Lösung dieser Aufgabe wird gemäß der Erfindung durch die im Anspruch 1 aufgeführten Merkmale gelöst. Weiterbildungen sind den Unteransprüchen zu entnehmen.

Nach der Erfindung wird während des Titeloder Track-Suchens oder der Entnahme einer neu angewählten Platte aus einem Magazin der tatsächliche Bewegungsablauf dynamisch, also durch eine bewegte, sich entsprechend ändernde Anzeige dargestellt, insbesondere die Bewegung des Pick-up-Systems horizontal in der einen oder der anderen Richtung. Der Wechsel von Platten aus einem Magazin gemäß Auswahl zeigt senkrecht dazu, also vertikal, eine andere Anzeige ebenfalls gemäß den aktuellen Bewegungsabläufen von Greifer oder Fahrstuhl im Gerät an.

Unter dynamischer Anzeige soll verstanden werden, daß horizontale und/oder vertikale Display-Segmente in entsprechend den tatsächlichen Bewegungsabläufen für die genannten Funktionen in schneller Folge nacheinander aufleuchten. Das können Punkte, Striche, Pfeile, Dreiecke oder Buchstaben sowie andere geeignete Symbole sein.

In der Zeichnung sind zwei Ausführungsbeispiele der Erfindung dargestellt und werden anschließend unter Bezug auf zwei Figuren erklärt. Es zeigen

Figur 1 ein Display "Disk anfahren aufwärts",
Figur 2 ein Display "Track suchen vorwärts".

Zur Veranschaulichung der Displays mit dynamischer Anzeige des zeilenweisen Durchlaufs dient bei beiden Figuren eine 8-stellige Dat-Matrix-Anzeige mit jeweils 9 x 7 Punkten. Es wurden neun Zeilen dargestellt. Durch rasche zeilenweise aufeinanderfolgende Anzeige der Zeichen, z.B im zeitlichen Abstand von 0,1 bis 0,5 sec., entsteht der Eindruck einer Laufschrift bzw. im darge stellten Fall eines bewegten Pfeiles. Die angezeigte Pfeilrichtung entspricht der physikalischen Bewegungsrichtung der bestimmten Funktion, wobei die Zeilen von oben nach unten durchlaufen:

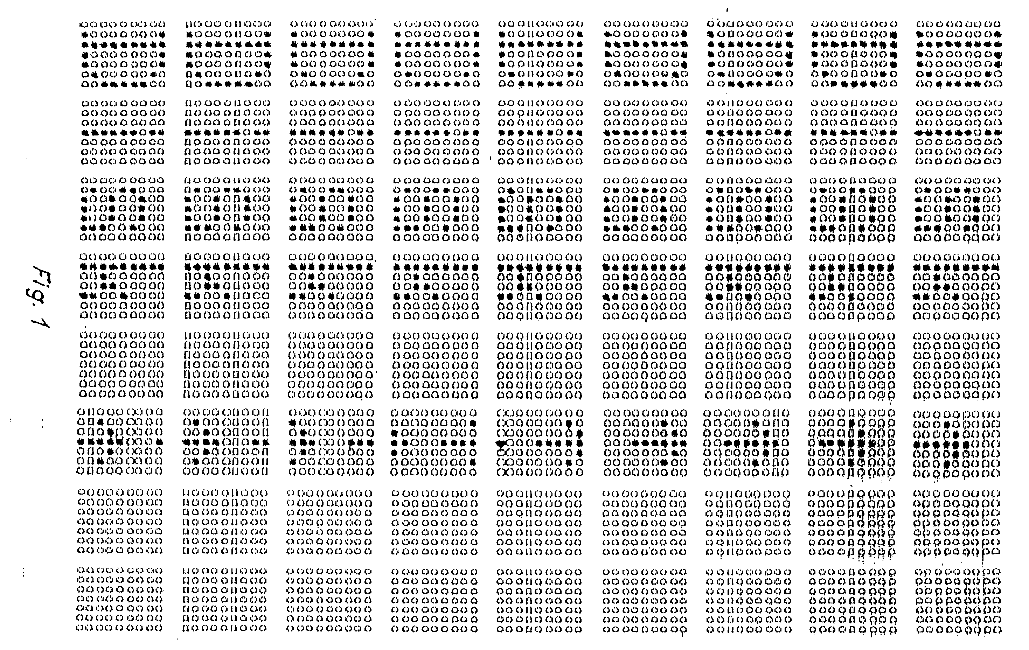

Figur 1: Fahre zu höherer Disk-Nr. ... der vertikale Pfeil läuft aufwärts;
nicht dargestellt der umgekehrte Vorgang der Pfeil läuft abwärts.

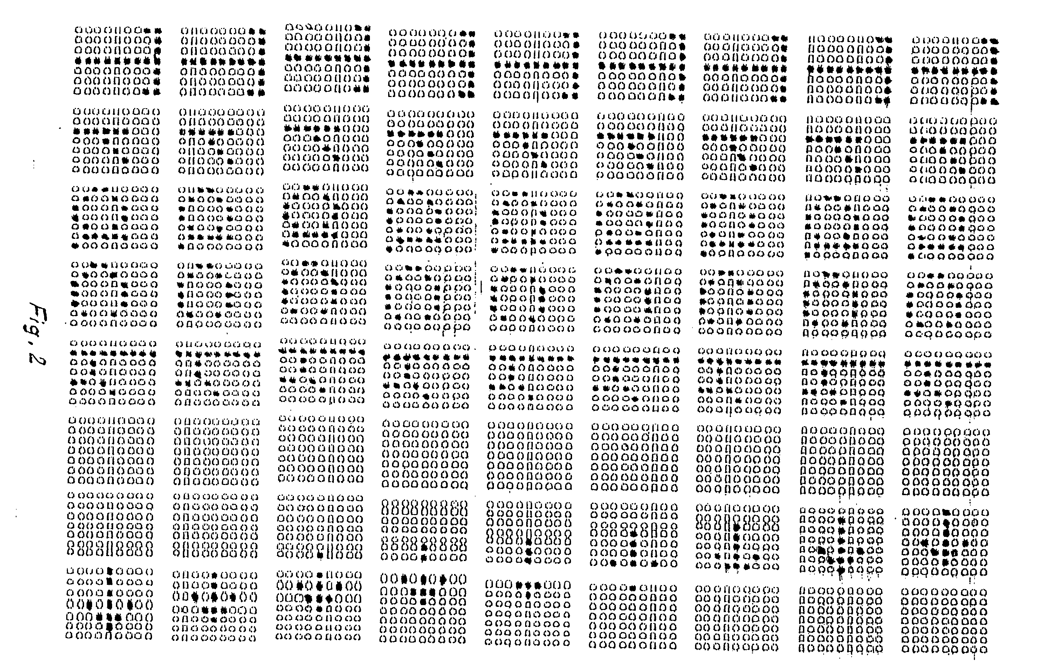

Figur 2: Suche auf der Disk den zu einer höheren Titel-Nr. gehörenden Track ... Pfeil läuft nach rechts;
nicht dargestellt der umgekehrte Vorgang ... der Pfeil läuft nach links.

In den meisten Fällen können vorhandene Display-Segmente, die gerade während der genannten Funktionsabläufe nicht aktiv sind, für diese dynamische Anzeige verwendet werden, z.B. Segmente der Zeit-Darstellung beim Titel- oder Track-Suchvorgang, eine LED-Kette beim Magazingerät zur Anzeige oder Auswahl oder des Auswechselns von Platten bei einem Magazin-Gerät, wobei dann der eigentliche Magazin-Status, also die statische Anzeige der Platten in den Magazinfächern, durch die tatsächliche Bewegungsanzeige ersetzt wird.

## Ansprüche

1. CD-Aufnahme- und/oder Wiedergabegerät mit Display-Mitteln an der Bedienungsseite des Gerätes zur Anzeige von Funktionen oder Daten, das für Einzelplattenbetrieb und/oder für Magazinbetrieb konzipiert ist, **dadurch gekennzeichnet**, daß zusätzlich zu den bekannten statischen Anzeigen auch dynamische Anzeigen bezüglich der Durchführung von Titel- oder Track- oder Magazinfach-Such-oder Wahlabläufen vorgesehen sind.

2. CD-Aufnahme- und/oder Wiedergabegerät nach Anspruch 1, **dadurch gekennzeichnet**, daß die zu Such- oder Auswahlabläufen gehörenden Bewegungsabläufe hinsichtlich Bewegung und Richtung der Bewegung senkrecht zueinander angeordnet sind, und zwar üblicherweise Titel-oder Track-Suche horizontal und Magazinfach-Suche vertikal, entsprechend der horizontalen Bewegungsebene des Pick-up-Systems und der vertika-

2

len Bewegungsebene bzw. -richtung des Plattengreifers bzw. Plattenfahrstuhls unter Verwendung eines Magazins mit übereinander befindlichen Plattenfächern oder Plattenaufnahmeeinrichtungen.

3. CD-Aufnahme- und/oder Wiedergabegerät nach einem der vorhergehenden Ansprüche, **dadurch gekennzeichnet**, daß für die dynamische Anzeige Teile einer vorhandenen Display-Vorrichtung für statische Anzeigen verwendet werden, die gerade nicht benötigt werden, und daß diese durch entsprechende dynamische Ansteuerung von elektronischen Steuermitteln, z.B. aus einem vorhandenen Mikroprozessor, aktiviert werden.

Fig. 1

Fig. 2

## EINSCHLÄGIGE DOKUMENTE

EP 88115061.9

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | <u>DE - A1 - 3 705 007</u> (SONY CORP.)<br><br>* Fig. 1,6; Spalte 7, Zeile 52 - Spalte 8, Zeile 31 * <br><br>-- | 1 | G 11 B 33/10<br>G 11 B 33/00 |
| A | <u>EP - A1 - 0 148 553</u> (SONY CORPORATION)<br><br>* Fig. 1,8; Zusammenfassung *<br><br>-- | 1 | |
| A | <u>EP - A2 - 0 230 375</u> (SHINTOM K.K.)<br><br>* Fig. 1; Spalte 2, Zeilen 45-51 *<br><br>-- | 1 | |
| A | <u>EP - A1 - 0 198 093</u> (FANUC LTD.)<br><br>* Fig. 5; Seite 7, Zeile 25 - Seite 8, Zeile 24 *<br><br>---- | 1 | |

RECHERCHIERTE SACHGEBIETE (Int. Cl.4)

G 11 B 33/00

G 11 B 17/00

Der vorliegende Recherchenbericht wurde für alle Patentansprüche erstellt.

| Recherchenort | Abschlußdatum der Recherche | Prüfer |
|---|---|---|
| WIEN | 11-01-1989 | BERGER |